# EUROPEAN PATENT SPECIFICATION

(11) **EP 0 315 419 B1**
(45) Date of publication and mention of the grant of the patent: **06.10.1993**
(21) Application number: 88310280.8
(22) Date of filing: 01.11.1988
(51) Int. Cl.: H02K 37/14

(54) **Encapsulated stepper motor**
Eingekapselter Schrittmotor
Motor pas à pas fermé

(30) Priority: 02.11.1987 US 116374
(43) Date of publication of application: 10.05.1989
(73) Proprietor: SEAGATE TECHNOLOGY, INC., Scotts Valley, California 95066-4544 (US)
(72) Inventor: Heine, Gunther Karl, Aptos California 95003 (US); Klein, Enrique Jorge, Los Altos California 94022 (US); Kuwert, Oswald, Aptos California 95003 (US); Seeger, Bernhard Michael, Santa Cruz California 95062 (US)
(74) Representative: Bayliss, Geoffrey Cyril

(56) References cited:
- US-A- 3 859 548
- US-A- 4 733 120
- PATENT ABSTRACTS OF JAPAN vol. 11, No. 81 (E-488)(2528), 12 March 1987; & JP-A-61236340
- PATENT ABSTRACTS OF JAPAN Vol. 5, no. 186 (E-84) (858), 25 Nov. 1981; & JP-A-56110464
- PATENT ABSTRACTS OF JAPAN vol. 11, no. 227 (E-526) (2674), 23 JULY 1987; & JP-A-62044060
- FEINWERKTECHNIK & MESSTECHNIK Vol. 94, No. 2, March 1986, pages 79-81, München, D; G. Bankmann: " Lagerung von Schrittmotoren für Datenspeicher"

## Description

This invention relates generally to stepper motors, and more particularly to a stepper motor designed for use in a disc drive.

Stepper motors designed to rotate through a predetermined angle upon application of a pulse of current are well known. Such stepping motors are useful in fields where positive, accurate, discrete movements reliably responsive to high frequency pulses are desired. Applications involving frequent repositioning of a mechanical member to successively different positions are ideally adapted for the use of a stepper motor. Thus, stepper motors are commonly used in disc drives to position the head carrying actuator relative to the information storage disc. Pulsed instructions are converted directly to accurate mechanical motions by the stepping motor.

Typical stepping motor construction involves a plurality of rotor poles, a number of stator poles, and a number of coils for generating a magnetic field. The magnetic field produces forces that tend to bring the rotor poles into alignment with the particular stator poles which form the lowest reluctance configuration. The phases are pulsed sequentially to bring each rotor-stator combination from non-alignment into an aligned configuration, thereby rotating the shaft to which the rotors' poles are commonly joined.

The construction of stepper motors has heretofore been complicated and expensive. The provision of a large number of poles introduces problems to conventional construction methods. Often the poles are formed as teeth on a gear, requiring expensive machining. A large number of tedious steps customarily are necessary to assemble the pole pieces and connect them with the support structure, the shaft, and the like. The stack of laminations used to form the stator must be precisely aligned in a narrow tolerance relationship with the rotor, with the stator pieces being captured between two end bells which are used to hold the components together. Achieving the required parallelism of the stack of laminations, the rotor and the concentricity of front and rear end bells is very difficult under these precise tolerance conditions. Accurate alignment is frequently compromised by irregularities in the stack of laminations, and by differences in tension when tightening the screws which hold the end bells together. Since the two end bells each hold a shaft support bearing, any misalignment can skew the rotor relative to the stack. Also, the end bells are separately machined and may have tolerance differences, resulting in a lack of concentricity in the assembled motor.

Further, in the event some defect occurs in the assembly of a stepping motor, it is extremely difficult to disassemble and rework the motor in an economically efficient fashion.

Thus, the market demands greater speed; increased accuracy in positioning the transducer over the target track; and lower power consumption in the stepper motor. This can best be achieved by optimizing the rotor/stator tooth geometry and dimensioning with improved tolerance compliance. It can also be achieved by increasing th magnetic force between the rotor and stator. The problem presented is to achieve this not by increasing the coil current, but by decreasing the gap between the rotor and the stator. The solution to this problem lies in improved control of rotor and stator fabrication, and the provision of better means for maintaining parallelism between the rotor and stator in the stepper motor, while reducing cost.

Japanese reference JP-61-236340 is directed to a structure for a conventional motor that reduces magnetic flux leakage from the motor interior, to promote bearing holding force. The stator and frame are "integrally molded" with a synthetic resin 23. Unfortunately this "integrally molded" stator-frame construction does not permit easily accomplished reworking of the motor, since the wound stator is permanently molded into the frame.

Japanese reference JP-62-44060 discloses a specific motor housing that includes irregular non-planar surfaces on the housing part, and includes conventional bearing mountings that provide a questionable degree of mounting tolerance. More specifically, bearings are supported in both a front section of the housing and a rear portion of the housing. It is this type of two-bell housing construction that the present single-housing member invention avoids.

It is an objective of this invention to provide a stepper motor design that can be reliably assembled with high quality and in large quantities, and to provide a stepper motor capable of reliable, precise high frequency step operation.

Another objective is imposed by the need in disc drive design to reduce the space occupied by the disc drive. Therefore, an objective herein is to provide a high frequency stepper motor that can be incorporated in a very small physical package.

A related objective herein is imposed by the constant requirement in the disc drive industry and especially the mass production disc drive industry to provide a highly reliable product at the lowest possible cost. Therefore, it is a specific objective to provide a stepper motor that can be reliably assembled at a relatively low cost. A related objective herein is to provide a stepper motor design incorporating construction features such that in the event of a necessity for reworking of the motor, such reworking can be easily done.

A further objective herein is to provide a high frequency stepper motor in which the alignment of the rotor and the stator can be consistently, reliably achieved even with the imposition of very precise tolerances.

A further and related objective herein is to provide a stepper motor for use in a disc drive which lends itself to a fully sealed design, to eliminate contamination in the head-disc assembly (HDA).

This invention provides an encapsulated stepper motor comprising: a single housing bell for supporting the elements of said motor, said housing comprising a single end wall and a cylindrical side wall, a support shaft mounted for rotation in said housing end wall, a rotor of said motor being mounted for rotation with said shaft in said housing bell, a stator mounted in said housing and having a plurality of coils wound thereon, selective activation of said coils causing step-by-step rotation of said rotor, and bearing means mounted only on one side of said rotor between said rotor and said housing end wall to support said rotor for said selective rotation; wherein the stator is removably mounted in said housing.

In a preferred embodiment, the stator laminations are designed with a decagonally interrupted periphery which can be used without changing the area of the poles, and allow space for the wires to the poles to be lead out past the lamination stack.

These symmetrically arranged flats serve a more significant function during the fabrication of the stator stack. The final accuracy of the assembled motor is greatly influenced by the precision with which the stator stack matches the extremely accurate design. The stator is formed of a plurality of individual laminations, each manufactured with precision die stamping equipment from thin sheet stock. Even the most precisely made manufacturing die set will, however, have variations, due to unavoidable tolerance differences, from nominal ideal design dimensions. The symmetrically arranged flat surfaces allow each lamination, as it exits the stamping die,to be rotated one tenth of a revolution before it is stacked on the preceding piece, to distribute any dimensional errors radially around the stator stack, thus preventing a flaw in the fabrication tool from being propagated throughout the height of the stator stack. Further, a preferred embodiment comprises a sealing plastic cover provided with a special pressure finger to hold the wires running to the stator coils away from the sharp edges of the stack wave spring and snap ring; the cover is also specifically designed to capture the wires to relieve the strain on the wires.

In an alternative embodiment, where the bearings are located on opposite sides of the rotor, the stator is piloted into a precisely aligned position on an inner wall of the housing adjacent the front bearing, the other end of the stack being held in place by a bearing holder interposed between the rear bearing and the edge of the stator, the holding forces being precisely defined to accurately align the stator with the rotor of the stepper motor. A precise definition of this aspect of the invention is given in claim 13. In a preferred embodiment of this alternative, this bearing holder includes an annular groove filled with a silicon rubber or similar semi-compliant material to allow for thermal differential expansion of the surface of the bearing against the surface of the bearing holder as well as to damp out vibrations between the bearing and the stator.

The alignment of the rear bearing in the envelope of the single bell housing is preferably defined using a screw that is threaded into the inside of the shaft adjacent the rear bearing holder, or a ball that is swaged into an opening in the shaft to press the outer surface of the shaft tightly against the inner surface of the inner race of the bearing.

The entire assembly, including the rear bearing, bearing holder and stator support, as well as the stator is held together with a star-shaped spring comprising a plurality of fingers that slide into and rotate within slots in the housing in a bayonet arrangement. These slots allow insertion of the star-shaped spring under pressure, and rotation under pressure within the groove to a seated position. The same groove then accepts the encapsulating plastic cover, preferably inserted through the same openings as the bayonet arms of the spring, though being rotated in the opposite direction.

The following is a description of some specific embodiments of the invention, reference being made to the accompanying drawings, in which:
FIG 1 is a vertical sectional view of this invention, the section being along line B-B of FIG 4B;
FIG 2 is an expanded detail view of the portion of FIG 1 marked by the arrow B;
FIG 3 is an expanded detail view of the portion of FIG 1 marked by the arrow C;
FIGS 4A and 4B are bottom plan views of the encapsulated motor of this invention showing the relationship of the rotor, shaft and stator of the assembled motor;
FIG 5 is a vertical, sectional view of an alternative embodiment of the motor of FIG 1;
FIG 6 is a plan view of the spring retainer used to hold together the motor of FIGs 1 and 5;
FIG 7 is a bottom plan view of the motor of FIG 5;
FIG 8 is a vertical sectional view of a second alternative emtodiment; and
FIG 9 is a vertical sectional view of a third alternative embodiment.

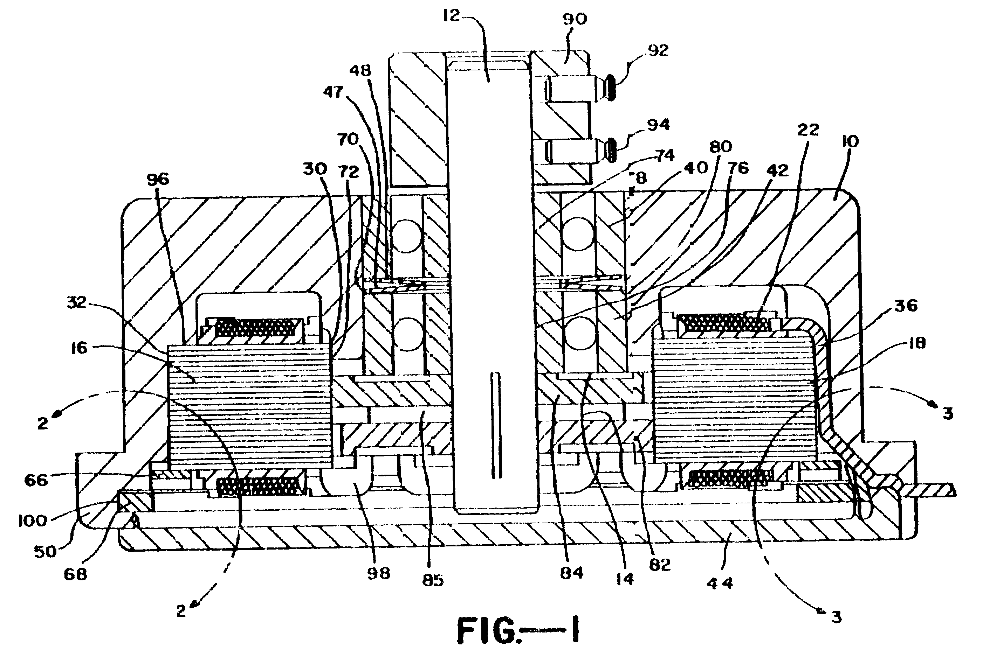

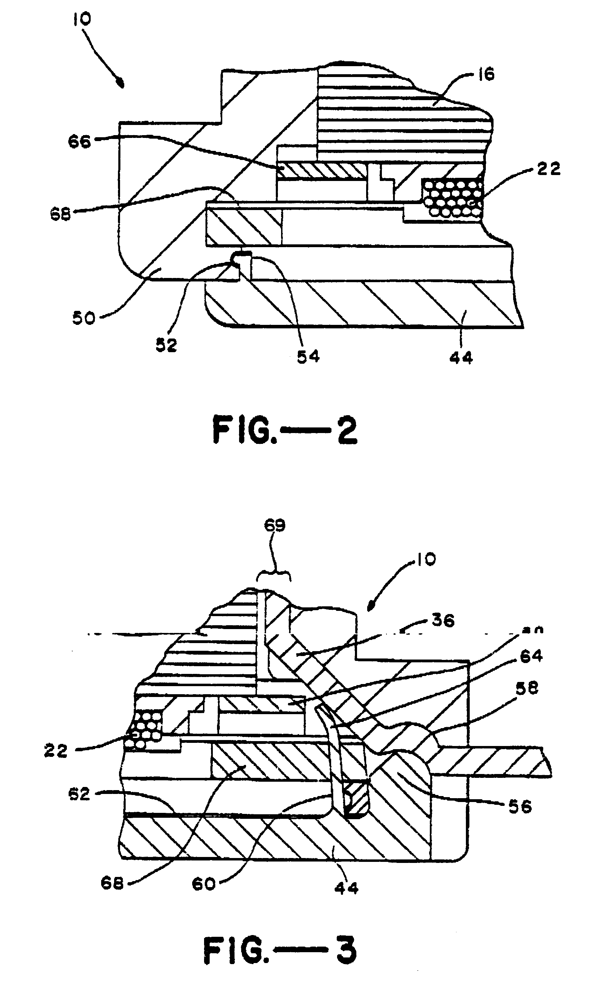

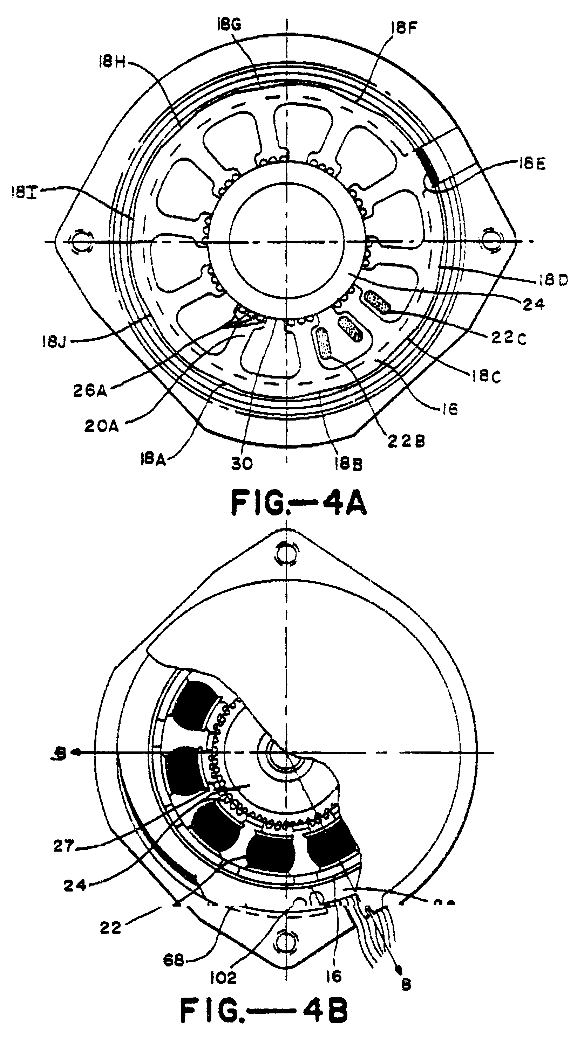

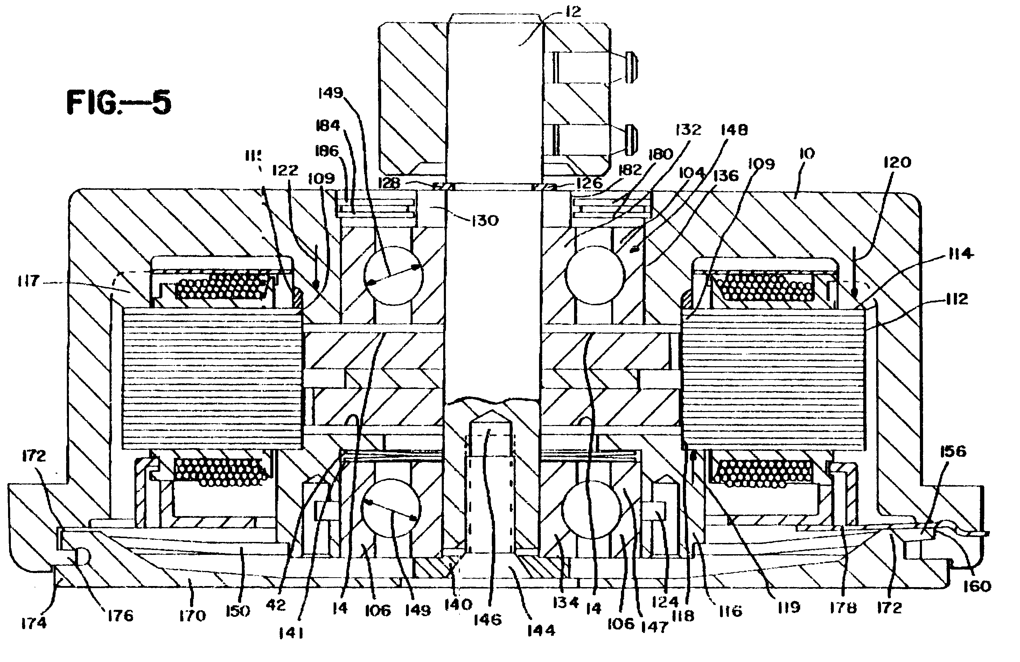

FIG 1 is a vertical section of the preferred embodiment of an encapsulated stepper motor disclosed and claimed herein. All the components of this stepper motor are mounted in a single machined housing 10, which could be cast and machined as an integral part of the base casting of the disc drive. The essential elements of the encapsulated motor of this design comprise the shaft 12 carrying a rotor 14, rotating past a stator 16 formed as a laminated stack. An end plan view of the stator 16 is shown in FIG 4A, where the laminated stack is shown to have an outer surface in the shape of an interrupted decagon. That is, the outer surface of the stack has ten flat sides 18A-18J, so that the individual laminations that form the stack may be properly aligned. The flats of this ten-sided symmetrical figure are each opposite a pole 20A-J of the stator.

Windings 22A, B, C for each phase are wound on the stator poles 20. As appears clearly in the illustration of FIG 4B, each stator pole 20A-J has a winding 22A-C thereon for selective energization to cause rotation of the rotor 24. The end of each stator pole has a plurality of teeth 26 facing the rotor teeth 27, the number of stator teeth 26 and the pitch between the rotor and stator teeth effecting the total rotation of the rotor 24 for each step. An advantage herein is that clearance between the stator teeth 26 and the rotor teeth 27 is minimized because the rotor/stator tolerances are precise.

Returning to FIG 1, one can see that the stator sections are accurately aligned with rotor 14 by the insertion of a stator section 16 between internal and external cylindrical surfaces 30, 32 of the housing 10. In this way, the alignment between the stator stack 16 and the rotor 14 is maintained, while encompassing the stator 16 within a single housing envelope 10, rather than using a pair of end bells as is required by the prior art. It can also be seen, as will be discussed further below, that the lead wires 36 to the stator coils 22 are led out past one of the flat surfaces 18 of the stator so that the wires are not unduly crimped or stressed.

In the preferred embodiment of the present design shown in FIG 1, the rotor shaft 12 is supported by a pair of bearings 40, 42, both mounted within the housing 10 toward the same end of the rotor shaft 12 and on the opposite side of the rotor 14 from the encapsulating cap 44. In FIG 1, both ball bearings 40, 42 are shown guided into a single machined cylindrical opening 46 in the housing 10. The bearings are separated by a pair of Belleville springs 47, 48 arranged to establish a biasing force against the outer race of each bearing toward the outer ends of the shaft in order to maintain the alignment of the shaft. By using the single cylindrical opening 46 in the cast housing 10 and locating bearings 40, 42 side by side, the chances of misalignment of the rotor shaft are minimized. In contrast, where two end bells are used, construction of the motor incorporates two different pieces. The assembler of the motor must control the parallelism of the stack when it is inserted in the housing, and the concentricity of the front and rear end bells. This is a difficult task, entailing working with precision tolerances on a mass production level This invention, by eliminating this problem, lends itself to mass production of high reliability stepper motors.

A further advantage of this design is that it is a sealed design--a requirement of disc drive manufacturers. The seal is accomplished in part by providing that the upper bearing 40 of the bearing pair whose top surface is flush with the upper surface of the housing includes an integral bearing seal. The open end of the housing below the rotor 14 and stator 16 and on the opposite side of the rotor from the bearings is covered with a plastic, snap-on cap 44 that covers the housing 10 below the end of the shaft 12. The advantage of incorporating the snap-on cap 44 is that if rework of the motor becomes necessary, the cap can be easily snapped off. Typically, a slot can be provided in the cap 44 which can be engaged by a screw driver to snap the cap off the housing.

As shown in detail in FIG 2, identified by arrow B in FIG 1, the lower portion of the housing 10 includes a flange 50 having a circumferential groove 52. The circumferential groove 52 receives a circumferential protrusion 54 carried on the cap 44, which protrusion 54 is pressure fit or snapped into the groove to hold the cap in place.

FIG 3, which is the detail identified by arrow C in FIG 1, illustrates a different section through the cap 44 and housing 10. Specifically, FIG 3 illustrates incorporation of a strain relief 56 to reduce the strain on the ribbon cable 36. A tongue 56, provided to function as this strain relief is defined in the upper end of the cap 44, which pushes the cable 36 up into a pocket 58 in the housing 10 in a limited region of the housing 10 where the flange 50 shown in FIG 2 is not present. By pushing this tongue 56 against the cable 36, the cable is deformed and captured tightly between the elastic cap 44 and the housing 10, insuring that no undue strain can be conveyed from the wires as they run through the housing back to the coils 22. Just inside the strain relief tongue 56, an extended finger 60 is provided reaching up from the top surface 62 of the cap 44 to contact and press against the ribbon cable 36. This elastic finger 60 is provided so that its distal end 64 contacts the ribbon cable 36 in an area adjacent to the wave washer 66 and snap ring 68 which are used to hold the stator laminations 16 in place In this way, the ribbon cable is biased away from and kept out of contact with the wave washer 66 and snap ring 68, both of which have sharp edges which could cut or damage the cable 36.

It should be noted here that the cable 36 is routed between the machined inner surface (32 in FIG 1) of housing 10, and one of the flat surfaces (18A-J in FIG 4) on the outside of the stator 16 in opening 69 shown here.

Several other features and advantages will become apparent by consideration of the assembly of the invention. For example, a classic problem in the assembly of a motor of this type is keeping the stator concentric with the rotor for free and clear rotation of the rotor relative to the stator.

Referring again to FIG 1, the stator 16 is piloted on a machined cylindrical internal surface 30 into the housing 10, as well as a machined cylindrical internal surface 32 which defines a portion of the outer upright wall of the housing 10. These housing surfaces are machined so that the surfaces, and especially the surface 30, are very concentric with the surface 70 that defines the position of the bearings 40, 42. In this way, the tolerances at the inside diameter of the stator 16 can be set to very closely match the machine surfaces, so that when the stator 16 is inserted, it centers itself on the piloting surface 30. This is significant in the assembly of the motor of this invention, as the design is defined by very small air gaps between the stator 16 and the rotor 14. The shaft 12 itself is centered by the bearings 40, 42 which are, as explained above, precisely located by the cylindrical surface 70 defining the edge of the common bearing bore in the housing 10. The rounded corner 72 at the base of the cylindrical piloting surface 30 allows the stator stack 16 to be pressed into position and rest on the cylindrical surface 30.

A further advantage of this design is that because of the minimal tolerances, the bearings 40, 42 can be inserted in place using a 4-surface lock. That is, inner surfaces 74, 76 of the inner races, and outer surfaces 78, 80 of the outer races of the bearings 40, 42 are locked to the shaft 12 and housing 10, even though the bearings 40, 42 and housing 10 may be made of dissimilar materials. This design can be adopted, leading to further manufacturing economies, because the center-to-center distance of the two bearings 40, 42 is so small as opposed to known designs wherein one bearing is located on each end of the motor.

In assembling the motor, the shaft 12, before its placement in the housing 10, has the rotor tooth segments 82, 84, separated by spacer 85, placed thereon with the teeth of the rotor segments 82, 84 precisely aligned 180° out of phase. Then the shaft 12 is placed in the housing 10 and the bearings 40, 42, together with the loading Belleville springs 47 and 48, are locked in place either by adhesive or by shrink fitting. When the adhesive is cured or the temperature differential withdrawn, the Belleville springs 47, 48 will define the permanent diverging preload force factors of the bearings 40, 42. At this point, the pulley 90 incorporating pins 92, 94 used to attach the pulley to a typical band of an actuator in a disc drive is press fitted on the end of the shaft. Prior to this step, if the bearing 40 is a magnetic bearing, the magnetic fluid is inserted. With the pressing on of the pulley, a very concentric rotor assembly is achieved. One should note that this assembly makes use of a rotor shaft which does not have any steps, i.e., a single diameter rotor shaft.

With completion of the rotor assembly, the stator 16 can now be inserted in place, piloted against the cylindrical surface 30 for precise location relative to the rotor 14, and resting against the machined surface 96 to maintain the stator lamination stack 16 perpendicular to the central bore. A plastic bobbin 98 is used to help hold the stator 16 in place, although the primary closure mechanism is the wave washer 66 and the circular retaining ring 68 (FIG 4B) that snaps into place in the machined annular channel 100 of housing flange 50. The wires 36 to the coils are led out through a special wiring channel provided by one of the flat surfaces 18 adjacent to this portion of the housing 10 adjacent to the stator stack 16. It should be noted from FIG 1 that the teeth of the stator extends beyond the area of rotor 14/stator 16 interface to provide piloting on the cylindrical surface 30. FIG 4B also helps illustrate the means for holding the stator stack 16 in place in the housing 10. Typically, the means of stator attachment is to simply glue it in place. In this embodiment, the stator stack is retained under tension with the wave washer 66 held in place using a snap ring 68 which is fitted into a machined annular channel 100 in the housing flange 50. The snap ring 68 includes eye holes (one is shown as 102) which can be used to compress the diameter of the snap ring to press it against the wave washer and into the machined annular channel 100, while leaving an opening in the snap ring through which the coil wires 36 can be passed.

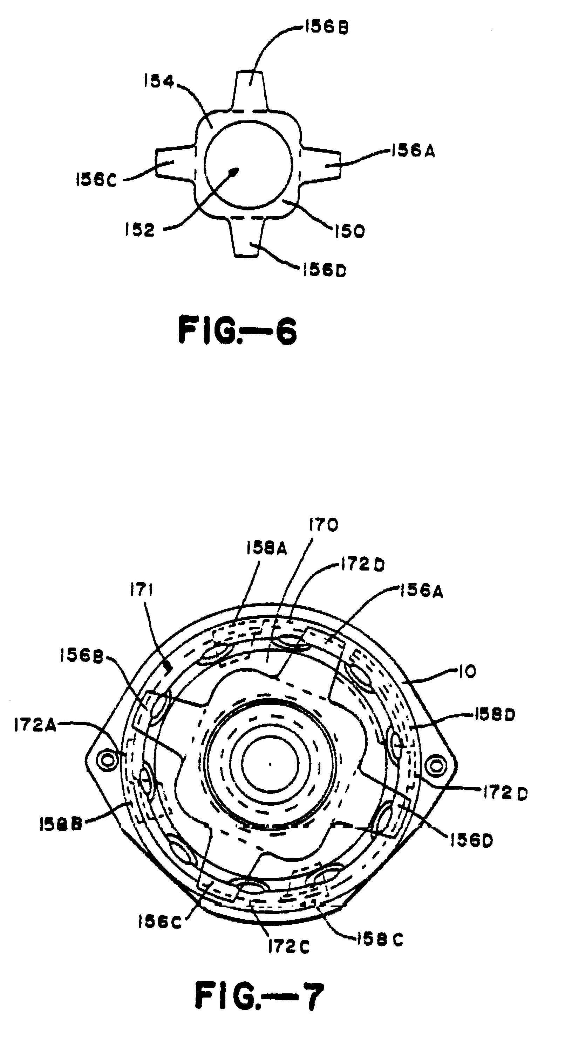

FIG 5 shows an alternative embodiment of a stepper motor using a single housing to hold all the elements of the stepper motor. In the embodiment of FIG 5, the housing 70 incorporates a structure in which the shaft 12 is supported for rotation by front and rear bearings 104, 106, respectively. These bearings 104, 106 straddle the rotor indicated generally at 14. In such an arrangement, it is important to note that a primary achievement in this invention is combining the two ball bearings 104, 106 in the single housing 10, although the front and rear bearings 104, 106 are located on opposite sides of the rotor 14. In contrast to the prior art wherein two separate end bells were screwed together or otherwise attached to form the motor housing which supports the stack of stator laminations 16, in this invention a unique method of supporting the stator stack 16 is provided within the single housing envelope 10. This prevents skewing of the rotor 14 relative to the stator 16, a common deficiency of the prior art.

Of critical importance to present design in achieving alignment of stator 16 and rotor 14 is the piloting of the stator stack 16 at its front undercorner on the front inner wall portion 110 of the housing 10. The right, or outer front portion 112 of the stator 16 rests against a machined circumferential surface 114 of the housing 10. Finally, the rear bearing holder 116 also pilots against the rear inner edge 118 of the stator 16. In this way, opposing forces represented by the arrows 119, 120 are set up on the outer front and inner rear portions of the stator stack. These forces 119, 120 combine with the piloting effect of the facing surfaces 109, 110 to forcibly and positively align the stator stack 16 in the housing 10.

In an alternative embodiment, the recessed region 121 above the front inner corner 109 of the stator stack could be filled in as shown on the left of FIG 5, forming machined circumferential surface 115 which will support the stator 16 at its front inner corner 109. As a consequence, the machined circumferential surface 114 could be eliminated as also shown at the left side of FIG 5 at 117, as the force indicated by arrow 120 necessary to balance the force indicated at arrow 119 could now be balanced by a new force which is created at the filled-in shoulder as indicated by the arrow 122.

Another significant element of this embodiment is the rear ball bearing holder 116, and manner in which it supports the stator 16 in place and is in turn cooperatively supported with the rear bearing 106 which is supporting the shaft 12. As a preliminary matter, it is important in this and the following embodiments that the rear bearing support 116 be of a non-magnetic material. This is important because it is located close to both the stator 16 and the rotor 14. If the rear bearing support 116 were of magnetic material, it could have a negative effect on the magnetic fields created during operation of the motor, and thereby negatively influence the positioning of motor. The same is true of the housing 10 which supports the motor structure. It is also important to select the material of the housing 10 and rear bearing support 116 to have a thermal coefficient of expansion as close as possible to that of the material of the stator 16. In this way, the disc drive and motor can be operated over the full defined temperature range for which a disc drive must be useful, without negative effects on the performance of the motor due to stator misalignment. This balanced thermal expansion is also important because of the fact that the stator 16 and housing 10 are effectively piloted on a relatively small surface using this rear bearing holder 116.

A further significant feature of this invention is the provision of an annular channel 124 in rear bearing holder 116 surrounding the rear bearing and filled with a silicon rubber material. The purpose of providing this annular channel 124 filled with a resilient material is to perform two functions. First, this allows for differential thermal expansion of the outer surface of the rear bearing of the motor relative to the rest of the motor. This is important because in the present design, all elements of the motor are effectively mechanically coupled, whereby a differential expansion of this outer surface could result in a modification of the alignment of the stator 16 relative to the rotor 14. Further, the provision of this resilient material constrains the outer bearing surface such that any vibrations that may occur in the rear bearing are damped out rather than being transmitted through the bearing support 116 to the remaining elements and specifically the stator of the motor.

The entire motor is assembled using a unique preload arrangement that relies in part on a snap ring 126 inserted in an annular channel 128 in the front portion of the shaft 12 at the front of the housing. This snap ring 126 is used to restrain the position of a sleeve 130 which in turn is pressed against the inner race 132 of front ball bearing 104. This ball bearing 104 is supported and locked in place between the shaft 12 and an inner surface 136 of the housing 10. This snap ring 126 and sleeve 130 arrangement is combined with a dead weight mechanism to achieve desired preload in this system. This preload is achieved by positioning the inner race 138 of lower bearing 106 using a sleeve or washer 140 which presses against the lower surface of the inner race 138 of that bearing 106. The appropriate tension to define the preload is achieved by providing a pair of Belleville springs 141, 142 at the upper surface of the rear bearing 106, the ends of the upper Belleville springs 142 in turn pressing against the bearing support 116, whereby a mechanical coupling is achieved through the piloted stator 116 and housing 10. The preload is locked in place with a screw 144 which is threaded and seated in a bore 146 internal to the shaft 12. Positioning of the screw 144 by threading it in an appropriate selected depth forms a DB configuration of a type known in this technology which effectively defines diverging forces from the rotor toward the ends of the shaft to provide a highly stable drive shaft for the stepper motor. In this configuration, the outer races 147, 148 of the rear and front bearings 104, 106 are effectively forced away from each other and biased toward points on the shaft axis beyond the ends of the shaft, providing an extended effective area of the biasing force to stabilize the shaft 12 as defined above. Of course, the Belleville springs 141, 142 can be replaced by other known resilient means such as wave washers the like that can provide the proper force distribution between two facing as required. this extended effective region is achieved by providing a contact point of the inner races against the shaft, while the contact point of the bearing support and spring is against the outer races. The lines of force indicating contact of the bearing balls with inner and outer races appear to extend from a point adjacent the outside of rotor 14 which is near the center of the shaft extending inward toward the outer ends of the shaft 12, as indicated by arrows 144.

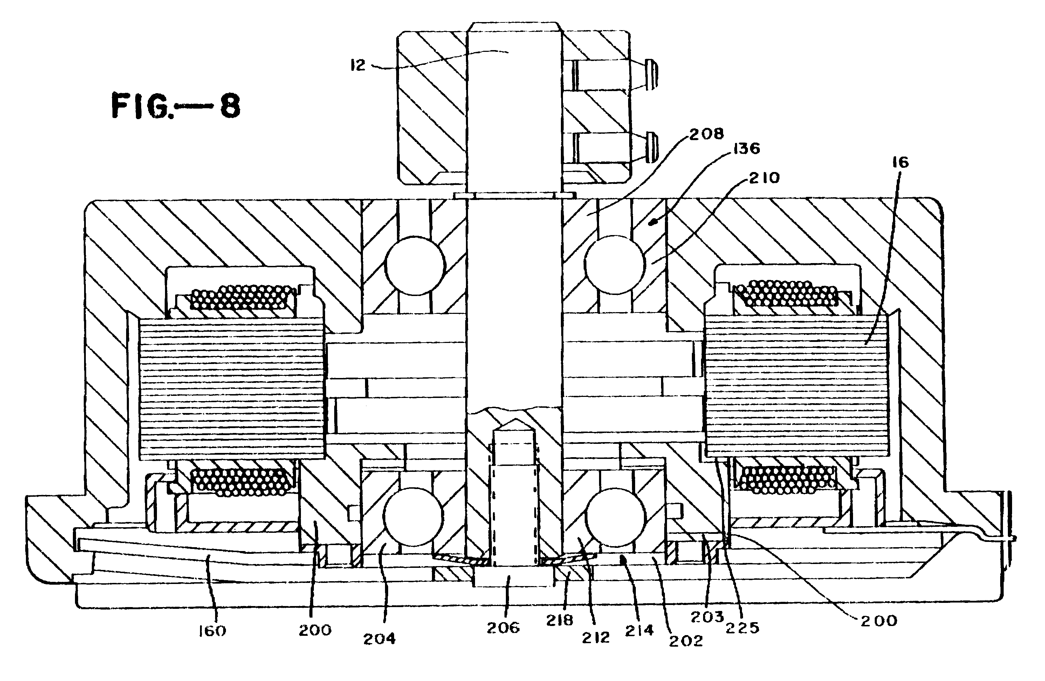

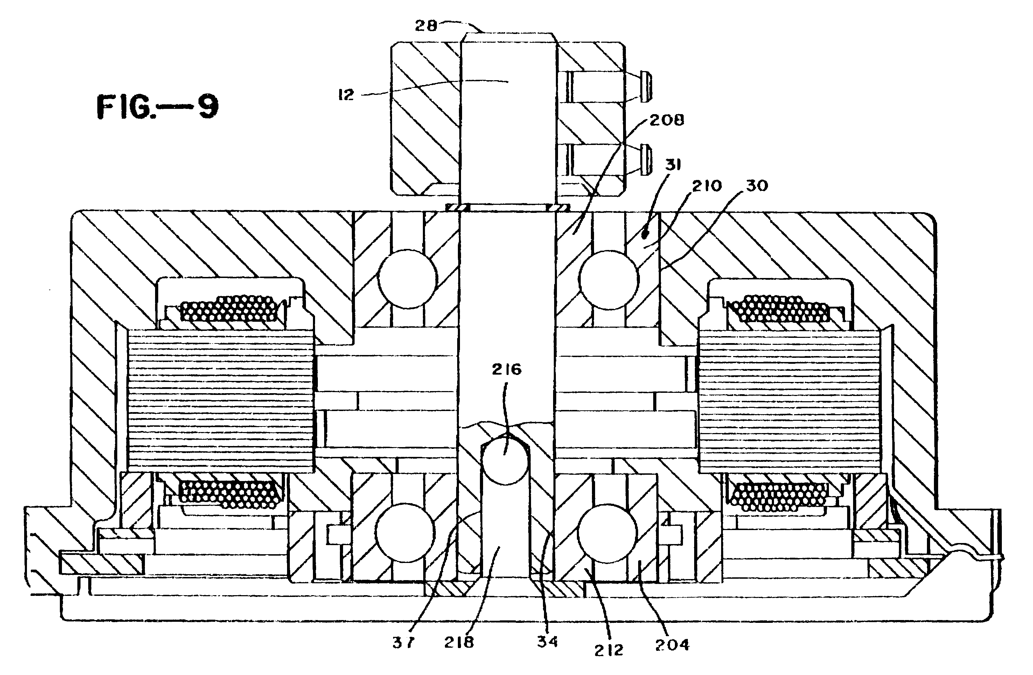

As a means of holding this motor together under appropriate tension and minimizing the possibility of movement of the parts while allowing for ease of assembly and access to the interior of the motor, a star-shaped spring 150 is provided shown in cross section in its assembled form in FIG 5, in a plan view in FIG 6, and as it appears inserted in housing 10 in FIG 7. As clearly appears in the plan view of FIG 6, the star-shaped spring 150 includes a central framing portion 154 having an opening at the center thereof 152, where the spring may be fitted over the shaft 12 and outer race 147 of the rear bearing 106 or directly over the rear bearing support 116 as shown in FIG 5. Thus, the framing portion 154 of the star-shaped spring 150 biases the rear bearing support 116 up against the rear of the stator 16 along the line of force 119 discussed above to aid in maintaining the position and piloting of the stator 16 within the housing 10. A plurality of fingers 156A-D are provided which, as appears most clearly in FIG 7, are inserted in notches 158A-D in the outer edge of the housing 10, the notches 158A-D opening into an annular channel 160. After insertion, the fingers 156A-D may be rotated through the annular channel 160 in the lower portion of the housing 10 to be seated in a position from which they cannot be easily disturbed. The star-shaped spring is made of a spring-like material such as a high tensile stainless steel in order to provide a considerable tensile force that will last over a long term upward against the bearing and stator support 116.

In summary, the star spring of FIGs 6-7 allows all the elements of this invention to be constrained and maintain a constant relative relationship without the use of screws. This is important, as screws can be tightened with variation, they are additional parts to handle, and therefore, add additional cost both in terms of materials and assembly time. Also, removal and reinsertion of screws during any needed rework can generate undesirable particulate contamination. Their elimination is clearly highly desirable. The cover 170 appears in sectional form in FIG 5 and can be seen inserted and closed in the housing in FIG 7. The edges of the cover are defined by the line indicated at 171. This cover completely covers and seals the housing against the entry of dirt. The cover also includes four fingers 172A-D which are inserted through the same notches 158A-D as the fingers 156A-D. After insertion, they may be rotated, preferably in the same direction as the bayonet fingers 156A-D of the starshaped spring 150 are rotated. Thus, the cover is seated behind the star spring 150 in the housing annular channel 160, and prevents the spring 150 from moving due to vibration or the like back toward the entry notches 158A-D.

It should also be noted that it is important that the sleeve 130 which is used to position the front bearing 104 be hermetically sealed against the shaft 12, and that the magnetic seal 180 be sealed at its outer edge against the housing 10 to maintain the integrity of the entire system.

The embodiment of FIG 5 comprises a dual pole magnetic seal 180 affixed at one end typically by an adhesive to the housing 10, the other end being separated by a narrow gap 182 from the magnetic material of the spacer 130. This gap 182 is filled with a ferro-fluidic magnetic material to form the magnetic seal and close the magnetic path. It should be noted that since the shaft 12 is of a non magnetic material, it is essential to provide a sleeve 130 rotating with the shaft and the inner race of the bearing to close the magnetic path. As can be seen, the magnetic path closes upon itself in this embodiment, with path generally being traced from one end plate 184 through the magnetic seal and the sleeve 130 to the other end plate 186. It would be possible to replace the embodiment shown herein with a magnetic seal comprising solely a magnetic piece without pole pieces, wherein the seal relies on fringing fields for the magnetic effect.

FIGS 8-9 illustrate further alternative embodiments hereof, and specifically of the rear bearing support holder and means for defining the preload in the motor. In FIG 8, the rear ball bearing support 200 is smaller than that shown in previous embodiments, although it is still fitted between the rear ball bearing 202 and the stator 16 to support the stator 16 in place. The inner corner 217 of the rear bearing support 200 is ground concentric with the rear bearing 202 and the outer corner 218 concentric with the stator laminations 16 in order to support the corner edge of the stator laminations. Note that the rear ball bearing support 200 and the rear bearing 202 must be separate pieces, as known bearing materials are magnetic, while the rear bearing support is non-magnetic.

Highly efficient approaches to fixing the preload in the motor can be seen illustrated in FIGS 8-9. Referring to FIG 9, assuming the base of the shaft 206 can be supported, and further assuming that the inner race 208 of the front bearing 136 is already glued in place, and further assuming that the outer race 210 of the front bearing is also pressed in place, then by placing a holding force against the combination rear bearing 202 and stator support 200, using the star spring of FIG 7 or an equivalent approach, then the inner race 212 of the rear bearing 214, which is a sliding fit on the shaft 12 can be placed. Then a ball 216 which is of an appropriate size relative to the hole 218 in the shaft can slide into place. This ball is swaged or pressed into place. This swaging operation using the sphere 216 locks the preload in place by fixing the inner race of the rear bearing against the shaft. This assembly is accomplished with a dead weight force against the inner race 212 of the rear bearing which effectively forces this inner race against the outer surface of the shaft while the sphere is being wedged in place.

In the embodiment shown in FIG 9, a metallic Belleville spring 218 is added surrounding the base of the shaft 21 and beneath the inner race 212 of the rear bearing in order to provide additional support to this bearing. These springs are held in place by the base of the screw 206 which is threaded into the bottom of the shaft as has previously been explained. It should also be noted that the bearing and stator support 200 in this embodiment includes a pair of metallic elements 223, 225 lining the machined grooves which abut the stator 16 and rear bearing 42. These elements 223, 255 which are magnetic but non-conductive, support the spindle holder and give it added rigidity.

The inclined plate 218 constitutes the modified metallic Belleville spring which provides the desired DB preload. As can be seen, the spring force is inserted against the outer end of the rear inner bearing race 212, creating the required diverging forces along the length of the shaft 21. FIG 8 also clearly shows the location of the star-shaped spring 150 which is used to bias the stator support into engagement with the stator.

## Claims

1. An encapsulated stepper motor comprising:
a single housing bell (10) for supporting the elements of said motor, said housing (10) comprising a single end wall and a cylindrical side wall,
a support shaft (12) mounted for rotation in said housing end wall,
a rotor (14) of said motor being mounted for rotation with said shaft (12) in said housing bell (10),
a stator (16) mounted in said housing (10) and having a plurality of coils (22) wound thereon, selective activation of said coils (22) causing step-by-step rotation of said rotor (14),
and bearing means (40, 42) mounted only on one side of said rotor (14) between said rotor (14) and said housing end wall to support said rotor for said selective rotation;
characterised in that the stator (16) is removably mounted in said housing.

2. An encapsulated stepper motor as in Claim 1, characterised in that said stator (16) includes inner and outer circumferential surfaces and said housing includes internal planar surfaces (30, 32) adapted to guide said stator into a predetermined position in said housing and hold said stator in said position.

3. An encapsulated stepper motor as in Claim 1 or Claim 2, characterised in that said cylindrical side wall of said housing (10) is jointed to said end wall at one end and is open at the other end, and in that a plastic cover (44) is press fitted over said open end of said side wall to seal the region enclosed by said housing against contamination.

4. An encapsulated stepper motor as in Claim 3, characterised in that said open end of said side wall includes a flange (50) having a matching recess (52) on the inside thereof and said plastic cover (44) includes a lip (54) adapted to fit within said recess to close said opening.

5. An encapsulated stepper motor as in Claim 3 or Claim 4, including a plurality of control wires (36) connected to said coils (22) for selectively energizing said coils, said wires being led out of said housing bell (10) between the open end of said bell and said cover (44), and said plastic cover is provided with a finger (60, 64) extending above said cover against said housing to hold said wires against said housing.

6. An encapsulated stepper motor as in Claim 5, characterised in that the outer surface of said stator (16) defines a regular decagon, said control wires (36) being led between the circular interior walls (30, 32) of said housing and the surface of said decagon.

7. An encapsulated stepper motor as in Claim 6, characterised in that said flange (50) of said side wall is interrupted by a wire channel (58) for leading said control wires (36) out of said housing, said finger (60, 64) being located adjacent said channel.

8. An encapsulated stepper motor as in any of Claims 3 to 7, including spring means (66) located at the base of said stator above the opening for said cover (44) for biasing the stator into said predetermined position in said housing.

9. An encapsulated stepper motor as in Claim 8, characterised in that the housing comprises a groove defined in said flange, said spring means comprising a flexible member (66) located below said stator for urging said stator into position, and a snap ring (68) held/biased in said groove (100) for holding said flexible member in position.

10. An encapsulated stepper motor as in Claim 9, characterised in that said flexible member (66) comprises a wave washer supported against a shelf below said stator by said snap ring (68).

11. An encapsulated stepper motor as in any of the preceding claims, characterised in that said rotor shaft (12) has an unstepped, constant diameter shaft, said motor including a pulley pressed on said shaft outside said housing on the same side of said rotor as said bearings.

12. An encapsulated stepper motor as in Claim 11, characterised in that said bearings (78, 80) are locked between said housing (10) and said shaft (12) for supporting said shaft between said pulley and said rotor.

13. An encapsulated stepper motor comprising:
a single housing bell (10) for supporting the elements of said motor, said housing (10) comprising a single end wall and a cylindrical side wall,
a support shaft (12) mounted for rotation in said housing end wall,
a rotor (14) of said motor being mounted for rotation with said shaft (12) in said housing bell (10),
a stator (16) fixedly mounted in said housing (10) and having a plurality of coils (22) wound thereon, selective activation of said coils (22) causing step-by-step rotation of said rotor (14),
front (104) and rear (106) bearing means mounted on either side of said rotor (14) within said single housing bell (10) to support said rotor for said selective rotation in response to energization of said stator coils,
means within said single housing bell (10) for supporting said rear bearing on said shaft, and
means (116) between said stator (16) and said rear bearing (106) for positioning said stator (16) relative to said bearing (106) and said rotor (14) and thereby defining a close tolerance relationship of the elements of said rotor;
characterised in that the stator (18) is removably mounted in the housing.

14. An encapsulated stepper motor as in Claim 13, characterised in that said stator (16) includes inner and outer circumferential surfaces and said housing includes an internal planar piloting surface (110) adapted to guide said stator into a predetermined position in said housing, said stator being held in said position by said piloting surface (110) and said means (116) for positioning said stator.

15. An encapsulated stepper motor as in Claim 14, characterised in that said means for positioning the stator comprises an annular non-magnetic support (116) having a groove (118) for piloting said stator on said support, whereby said stator is closely aligned with said rotor by the piloting effect of said housing and said support.

16. An encapsulated stepper motor as in Claim 15, including a star-shaped spring (150) aligned with said rear bearing (106) and said bearing holder (116) to support said bearing, said holder and said stator in aligned relationship in said housing.

17. An encapsulated stepper motor as in Claim 16, characterised in that said star-shaped spring (150) includes a central portion (154) comprising a ring-like section and a plurality of fingers (156 A to D) extending radially from said central portion, said housing comprising an annular groove (160) cooperating with said radial fingers to capture said spring and restrain the elements of said motor.

18. An encapsulated stepper motor as in Claim 17, characterised in that said housing (10) includes a plurality of openings (158 A to D) allowing entry of the ends of said radial fingers (156 A to D), rotation of said spring (150) relative to said housing capturing said spring in said groove and thereby the elements of said motor in aligned relationship in said housing.

19. An encapsulated stepper motor as in Claim 18, including a cover (170) for said encapsulated motor having a plurality of prongs (172 A to D) located in spaced positions on said cover to be inserted in said groove (160) in said housing, whereby said cover is captured in said groove to seal said motor against the environment.

20. An encapsulated stepper motor as in Claim 19, including means for capturing said rear bearing in said housing comprising an open sleeve (218) extending up the center of said shaft, and a ball (216) wedged into said sleeve adjacent to said rear bearing (106), the pressure of said ball against the outer surface of said sleeve and the inner race of said rear bearing positioning said rear bearing on said shaft.

21. An encapsulated stepper motor as in Claim 14, wherein said bearing support includes an annular groove in the side of said support adjacent the outer race of said rear bearing, said groove including an annular ring-like form (218) held in said groove and pressed between said rear bearing and said bearing support to damp out vibrations of said motor and allow for differential thermal expansion of said bearing and said bearing support.

## Patentansprüche

1. Gekapselter Schrittmotor
- mit einer einzigen Gehäuseglocke (10) zum Abstützen der Elemente des Motors, wobei das Gehäuse (10) eine einzige Stirnwand und eine zylindrische Seitenwand hat,
- mit einer Lagerwelle (12), die für eine Drehung in der Gehäusestirnwand angebracht ist,
- mit einem Rotor (14) des Motors, der für eine Drehung mit der Welle (12) in der Gehäuseglocke (10) angeordnet ist,
- mit einem Stator (16), der in dem Gehäuse (10) angeordnet ist und eine Vielzahl von darauf gewikkelten Wicklungen (22) hat, wobei eine selektive Aktivierung der Wicklungen (22) die schrittweise Drehung des Rotors (14) herbeiführt, und
- mit Lagereinrichtungen (40, 42), die nur auf einer Seite des Rotors (14) zwischen dem Rotor (14) und der Gehäusestirnwand zur Lagerung des Rotors für die selektive Drehung angeordnet sind,
dadurch gekennzeichnet,
- daß der Stator (16) in dem Gehäuse entfernbar angebracht ist.

2. Gekapselter Schrittmotor nach Anspruch 1, dadurch gekennzeichnet, daß der Stator (16) innere und äußere Umfangsflächen und das Gehäuse innere planparallele Flächen (30, 32) aufweist, die geeignet sind, den Stator in eine vorher festgelegte Position in dem Gehäuse zu führen und den Stator in der Position zu halten.

3. Gekapselter Schrittmotor nach Anspruch 1 oder Anspruch 2, dadurch gekennzeichnet, daß die zylindrische Seitenwand des Gehäuses (10) mit ihrem einen Ende mit der Stirnwand verbunden und an ihrem anderen Ende offen ist und daß eine Kunststoffabdeckung (44) im Preßsitz über dem offenen Ende der Seitenwand angeordnet ist, um den von dem Gehäuse eingeschlossenen Bereich gegen Verunreinigung abzudichten.

4. Gekapselter Schrittmotor nach Anspruch 3, dadurch gekennzeichnet, daß das offene Ende der Seitenwand einen Flansch (50) mit einer Paßnut (52) auf seiner Innenseite und die Kunststoffabdeckung (44) eine Lippe (54) aufweist, die in die Nut zum Schließen der Öffnung einpaßbar ist.

5. Gekapselter Schrittmotor nach Anspruch 3 oder Anspruch 4 mit einer Vielzahl von Steuerdrähten (36), die mit den Wicklungen (22) für die selektive Aktivierung der Wicklungen verbunden sind, wobei die Drähte aus der Gehäuseglocke (10) zwischen dem offenen Ende der Glocke und der Abdeckung (44) herausgeführt sind und die Kunststoffabdeckung mit einem Finger (60, 64) versehen ist, der sich über der Abdeckung gegen das Gehäuse erstreckt, um die Drähte an dem Gehäuse zu halten.

6. Gekapselter Schrittmotor nach Anspruch 5, dadurch gekennzeichnet, daß die Außenfläche des Stators (16) ein regelmäßiges Zehneck bildet, wobei die Steuerdrähte (36) zwischen den kreisförmigen Innenwänden (30, 32) des Gehäuses und der Oberfläche des Zehnecks geführt sind.

7. Gekapselter Schrittmotor nach Anspruch 6, dadurch gekennzeichnet, daß der Flansch (50) der Seitenwand durch einen Drahtkanal (58) zum Führen der Steuerdrähte (36) aus dem Gehäuse heraus unterbrochen ist, wobei der Finger (60, 64) angrenzend an den Kanal angeordnet ist.

8. Gekapselter Schrittmotor nach einem der Ansprüche 3 bis 7 mit Federeinrichtungen (66), die an der Basis des Stators über der Öffnung für die Abdeckung (44) zum Vorspannen des Stators in die vorher festgelegte Position in dem Gehäuse positioniert sind.

9. Gekapselter Schrittmotor nach Anspruch 8, dadurch gekennzeichnet, daß das Gehäuse eine von dem Flansch gebildete Aussparung aufweist, wobei die Federeinrichtungen ein flexibles Element (66), das unter dem Stator angeordnet ist, um den Stator in Position zu drücken, und einen Schnappring (68) aufweisen, der in der Aussparung (100) gehalten/vorgespannt ist, um das flexible Element in Position zu halten.

10. Gekapselter Schrittmotor nach Anspruch 9, dadurch gekennzeichnet, daß das flexible Element (66) eine Wellenscheibe aufweist, die gegen eine Leiste unter dem Stator durch den Schnappring (68) abgestützt ist.

11. Gekapselter Schrittmotor nach einem der vorhergehenden Ansprüche, dadurch gekennzeichnet, daß die Rotorwelle (12) eine stufenfreie Welle mit konstantem Durchmesser ist, wobei der Motor eine Riemenscheibe aufweist, die auf die Welle außerhalb des Gehäuses auf der gleichen Seite des Rotors wie die Lager aufgepreßt ist.

12. Gekapselter Schrittmotor nach Anspruch 11, dadurch gekennzeichnet, daß die Lager (78, 80) zwischen dem Gehäuse (10) und der Welle (12) zum Lagern der Welle zwischen der Riemenscheibe und dem Rotor eingeschlossen sind.

13. Gekapselter Schrittmotor
- mit einer einzigen Gehäuseglocke (10) zum Abstützen der Elemente des Motors, wobei das Gehäuse (10) eine einzige Stirnwand und eine zylindrische Seitenwand aufweist,
- mit einer Lagerwelle (12), die für eine Drehung in der Gehäusestirnwand angebracht ist,
- mit einem Rotor (14) des Motors, der für eine Drehung mit der Welle (12) in der Gehäuseglocke (10) angeordnet ist,
- mit einem Stator (16), der in dem Gehäuse (10) festgelegt ist und eine Vielzahl von auf ihn gewikkelten Wicklungen (22) aufweist, wobei die selektive Aktivierung der Wicklungen (22) eine schrittweise Rotation des Rotors (14) herbeiführt,
- mit vorderen (104) und hinteren (106) Lagereinrichtungen, die auf jeder Seite des Rotors (14) in der einzigen Gehäuseglocke (10) angeordnet sind, um den Rotor für die selektive Drehung ansprechend auf die Aktivierung der Statorwicklungen zu lagern,
- mit Einrichtungen in der einzigen Gehäuseglocke (10) zum Abstützen des hinteren Lagers auf der Welle und
- mit Einrichtungen (116) zwischen dem Stator (16) und dem hinteren Lager (106) zum Positionieren des Stators (16) bezüglich des Lagers (106) und des Rotors (14), um dadurch eine enge Toleranzbeziehung der Bauteile des Rotors zu definieren,
dadurch gekennzeichnet,
daß der Stator (18) entfernbar in dem Gehäuse angebracht ist.

14. Gekapselter Schrittmotor nach Anspruch 13, dadurch gekennzeichnet, daß der Stator (16) innere und äußere Umfangsflächen und das Gehäuse eine innere planparallele Leitfläche (110) hat, die zum Führen des Stators in eine vorher festgelegte Position in dem Gehäuse geeignet ist, wobei der Stator durch die Leitfläche (110) und die Einrichtungen (116) zum Positionieren des Stators in der Position gehalten ist.

15. Gekapselter Schrittmotor nach Anspruch 14, dadurch gekennzeichnet, daß die Einrichtungen zum Positionieren des Stators eine ringförmige, nicht-magnetische Halterung (116) mit einer Nut (118) zum Leiten des Stators auf der Halterung aufweist, wodurch der Stator eng fluchtend zu dem Rotor durch die Leitwirkung des Gehäuses und der Halterung ausgerichtet ist.

16. Gekapselter Schrittmotor nach Anspruch 15 mit einer sternförmigen Feder (150), die zu dem hinteren Lager (106) und dem Lagerhalter (116) fluchtend ausgerichtet ist, um das Lager, den Halter und den Stator in fluchtender Beziehung in dem Gehäuse zu halten.

17. Gekapselter Schrittmotor nach Anspruch 16, dadurch gekennzeichnet, daß die sternförmige Feder (150) einen zentralen Abschnitt (154) mit einem ringförmigen Abschnitt und einer Vielzahl von Fingern (156 A bis D) aufweist, die sich radial von dem zentralen Abschnitt aus erstrecken, wobei das Gehäuse eine Ringnut (160) hat, die mit den radialen Fingern so zusammenwirkt, daß die Feder gefangen und die Bauteile des Motors zurückgehalten werden.

18. Gekapselter Schrittmotor nach Anspruch 17, dadurch gekennzeichnet, daß das Gehäuse (10) eine Vielzahl von Öffnungen (158 A bis D) hat, die den Eintritt der Enden der radialen Finger (156 A bis D) ermöglichen, wobei eine Drehung der Feder (150) relativ zu dem Gehäuse die Feder in der Nut und dadurch die Bauteile des Motors in fluchtend ausgerichteter Beziehung in dem Gehäuse einfängt.

19. Gekapselter Schrittmotor nach Anspruch 18 mit einer Abdeckung (170) für den gekapselten Motor, die eine Vielzahl von Klauen (172 A bis D) aufweist, die in Abständen an der Abdeckung für den Einsatz in der Nut (160) in dem Gehäuse angeordnet sind, wodurch die Abdeckung in der Nut eingefangen wird, um den Motor gegen die Umgebung abzudichten.

20. Gekapselter Schrittmotor nach Anspruch 19 mit Einrichtungen zum Fangen des hinteren Lagers in dem Gehäuse, welche eine offene Hülse (218), die sich bis zur Mitte der Welle erstreckt, und eine Kugel (216) aufweisen, die in die Hülse angrenzend an das hintere Lager (216) eingekeilt ist, wobei der Druck der Kugel gegen die Außenfläche der Hülse und die innere Lauffläche des hinteren Lagers das hintere Lager auf der Welle positioniert.

21. Gekapselter Schrittmotor nach Anspruch 14, bei welchem die Lagerabstützung eine Ringnut in der Seite der Abstützung angrenzend an die äußere Lauffläche des hinteren Lagers aufweist, wobei die Nut ein ringförmiges Formstück (218) hat, das in der Nut gehalten ist und zwischen das hintere Lager und die Lagerabstützung gedrückt ist, um Vibrationen des Motors zu dämpfen und um eine unterschiedliche thermische Ausdehnung des Lagers und der Lagerabstützung zu ermöglichen.

## Revendications

1. Moteur pas à pas encapsulé comportant :
un boîtier unique en cloche (10) destiné à supporter les éléments dudit moteur, ledit boitier (10) comportant une seule paroi extrême et une paroi latérale cylindrique,
un arbre (12) de support monté de façon à tourner dans ladite paroi extrême du boîtier,
un rotor (14) dudit moteur étant monté de façon à tourner avec ledit arbre (12) dans ledit boîtier en cloche (10),
un stator (16) monté dans ledit boîtier (10) et sur lequel sont bobinés plusieurs enroulements (22), une excitation sélective desdits enroulements (22) provoquant une rotation pas à pas dudit rotor (14),
et des moyens à paliers (40, 42) montés uniquement sur un côté dudit rotor (14) entre ledit rotor (14) et ladite paroi extrême du boîtier afin de supporter ledit rotor pour ladite rotation sélective ;
caractérisé en ce que le stator (16) est monté de façon amovible dans ledit boîtier.

2. Moteur pas à pas encapsulé selon la revendication 1, caractérisé en ce que ledit stator (16) présente des surfaces circonférentielles intérieure et extérieure et ledit boîtier présente des surfaces planes intérieures (30, 32) conçues pour guider ledit stator jusque dans une position prédéterminée dans ledit boîtier et pour maintenir ledit stator dans ladite position.

3. Moteur pas à pas encapsulé selon la revendication 1 ou la revendication 2, caractérisé en ce que ladite paroi latérale cylindrique dudit boîtier (10) est reliée à ladite paroi extrême à une extrémité et est ouverte à l'autre extrémité, et en ce qu'un capot (44) en matière plastique est ajusté à force sur ladite extrémité ouverte de ladite paroi latérale pour protéger hermétiquement de la contamination la zone renfermée par ledit boîtier.

4. Moteur pas à pas encapsulé selon la revendication 3, caractérisé en ce que ladite extrémité ouverte de ladite paroi latérale comporte un rebord (50) présentant un évidement (52) d'adaptation sur son côté intérieur et ledit capot (44) en matière plastique comporte une lèvre (54) conçue pour s'ajuster dans ledit évidement afin de fermer ladite ouverture.

5. Moteur pas à pas encapsulé selon la revendication 3 ou la revendication 4, comprenant plusieurs fils (36) de commande connectés auxdits enroulements (22) pour exciter sélectivement lesdits enroulements, lesdits fils sortant dudit boîtier en cloche (10) entre l'extrémité ouverte de ladite cloche et ledit capot (44), et ledit capot en matière plastique étant pourvu d'un doigt (60, 64) s'étendant audessus dudit capot contre ledit boîtier pour maintenir lesdits fils contre ledit boîtier.

6. Moteur pas à pas encapsulé selon la revendication 5, caractérisé en ce que la surface extérieure dudit stator (16) définit un décagone régulier, lesdits fils (36) de commande étant passés entre les parois intérieures circulaires (30, 32) dudit boîtier et la surface dudit décagone.

7. Moteur pas à pas encapsulé selon la revendication 6, caractérisé en ce que ledit rebord (50) de ladite paroi latérale est interrompu par un canal (58) pour fil pour faire sortir lesdits fils (36) de commande dudit boîtier, ledit doigt (60, 64) étant placé de façon à être adjacent audit canal.

8. Moteur à pas à pas encapsulé selon l'une quelconque des revendications 3 à 7, comprenant un moyen à ressort (66) placé à la base dudit stator au-dessus de l'ouverture pour ledit capot (44) afin de rappeler le stator dans ladite position prédéterminée dans ledit boîtier.

9. Moteur pas à pas encapsulé selon la revendication 8, caractérisé en ce que le boîtier présente une gorge définie dans ledit rebord, ledit moyen à ressort comportant un élément flexible (66) placé au-dessous dudit stator pour rappeler ledit stator en position, et un anneau à encliqueter (68) maintenu/rappelé dans ladite gorge (100) pour maintenir ledit élément flexible en position.

10. Moteur pas à pas encapsulé selon la revendication 9, caractérisé en ce que ledit élément flexible (66) comporte une rondelle ondulée supportée contre un épaulement au-dessous dudit stator par ledit anneau à encliqueter (68).

11. Moteur pas à pas encapsulé selon l'une quelconque des revendications précédentes, caractérisé en ce que ledit arbre (12) du rotor comporte un arbre non épaulé, à diamètre constant, ledit moteur comprenant une poulie emmanchée à force sur ledit arbre à l'extérieur dudit boîtier, sur le même côté dudit rotor que lesdits paliers.

12. Moteur pas à pas encapsulé selon la revendication 11, caractérisé en ce que lesdits paliers (78, 80) sont bloqués entre ledit boîtier (10) et ledit arbre (12) afin de supporter ledit arbre entre ladite poulie et ledit rotor.

13. Moteur pas à pas encapsulé comportant :
un boîtier unique en cloche (10) destiné à supporter les éléments dudit moteur, ledit boitier (10) comportant une paroi extrême unique et un paroi latérale cylindrique ,
un arbre (12) de support monté de façon à tourner dans ladite paroi extrême du boîtier,
un rotor (14) dudit moteur étant monté de façon à tourner avec ledit arbre (12) dans ledit boîtier en cloche (10),
un stator (16) monté fixement dans ledit boîtier (10) et sur lequel sont bobinés plusieurs enroulements (22), une excitation sélective desdits enroulements (22) provoquant une rotation pas à pas dudit rotor (14),
des moyens à paliers avant (104) et arrière (106) montés sur chaque côté dudit rotor (14) à l'intérieur dudit boîtier unique en cloche (10) pour supporter ledit rotor pendant ladite rotation sélective en réponse à une excitation desdits enroulements du stator,
des moyens à l'intérieur dudit boîtier unique en cloche (10) pour supporter ledit palier arrière sur ledit arbre, et
des moyens (116) entre ledit stator (16) et ledit palier arrière (106) pour positionner ledit stator (16) par rapport audit palier (106) et audit rotor (14) et définir ainsi une relation de tolérance étroite entre les éléments dudit rotor ;
caractérisé en ce que le stator (18) est monté de façon amovible dans le boîtier.

14. Moteur pas à pas encapsulé selon la revendication 13, caractérisé en ce que ledit stator (16) présente des surfaces circonférentielles intérieure et extérieure et ledit boîtier présente une surface plane intérieure (110) de guidage destinée à guider ledit stator jusque dans une position prédéterminée dans ledit boîtier, ledit stator étant maintenu dans ladite position par ladite surface (110) de guidage et lesdits moyens (116) pour positionner ledit stator.

15. Moteur pas à pas encapsulé selon la revendication 14, caractérisé en ce que lesdits moyens destinés à positionner le stator comprennent un support annulaire non magnétique (116) ayant une gorge (118) pour guider ledit stator sur ledit support, grâce à quoi ledit stator est aligné étroitement avec ledit rotor par l'effet de guidage dudit boîtier et dudit support.

16. Moteur pas à pas encapsulé selon la revendication 15, comprenant un ressort (150) en forme d'étoile aligné avec ledit palier arrière (106) et ledit support (116) de palier pour supporter ledit palier, ledit support et ledit stator dans une disposition alignée dans ledit boîtier.

17. Moteur pas à pas encapsulé selon la revendication 16, caractérisé en ce que ledit ressort (150) en forme d'étoile comprend une partie centrale (154) comportant une section analogue à un anneau et plusieurs doigts (156 A à D) qui partent radialement de ladite partie centrale, ledit boîtier présentant une gorge annulaire (160) coopérant avec lesdits doigts radiaux pour emprisonner ledit ressort et retenir les éléments dudit moteur.

18. Moteur pas à pas encapsulé selon la revendication 17, caractérisé en ce que ledit boîtier (10) présente plusieurs ouvertures (158 A à D) permettant l'entrée des extrémités desdits doigts radiaux (156 A à D), une rotation dudit ressort (150) par rapport audit boîtier emprisonnant ledit ressort dans ladite gorge et donc les éléments dudit moteur dans une disposition alignée dans ledit boîtier.

19. Moteur pas à pas encapsulé selon la revendication 18, comprenant un capot (170) pour ledit moteur encapsulé, ayant plusieurs griffes (172 A à D) placées dans des positions espacées sur ledit capot pour être insérées dans ladite gorge (160) dudit boîtier, grâce à quoi ledit capot est emprisonné dans ladite gorge pour protéger hermétiquement ledit moteur contre l'environnement.

20. Moteur pas à pas encapsulé selon la revendication 19, comprenant des moyens destinés à emprisonner ledit palier arrière dans ledit boîtier, comportant un manchon ouvert (218) s'élevant jusqu'au centre dudit arbre, et une bille (216) coincée dans ledit manchon à proximité immédiate dudit palier arrière (106), la pression de ladite bille contre la surface extérieure dudit manchon et la bague intérieure dudit palier arrière positionnant ledit palier arrière sur ledit arbre.

21. Moteur pas à pas encapsulé selon la revendication 14, dans lequel ledit support de palier présente une gorge annulaire dans le côté dudit support adjacente à la bague extérieure dudit palier arrière, ladite gorge comprenant une forme (218) analogue à une bague annulaire maintenue dans ladite gorge et pressée entre ledit palier arrière et ledit support de palier pour amortir des vibrations dudit moteur et permettre une dilatation thermique différentielle dudit palier et dudit support de palier.
